Europäisches Patentamt

European Patent Office

Office européen des brevets

(11) Publication number: **0 053 412**
**B1**

## EUROPEAN PATENT SPECIFICATION

(45) Date of publication of patent specification: **06.03.85**

(21) Application number: **81201251.6**

(22) Date of filing: **06.11.81**

(51) Int. Cl.⁴: **B 65 D 88/54,** B 60 P 1/60

(54) **Storage vessel for granular or particulate solid.**

(30) Priority: **02.12.80 GB 8038645**

(43) Date of publication of application:
**09.06.82 Bulletin 82/23**

(45) Publication of the grant of the patent:
**06.03.85 Bulletin 85/10**

(84) Designated Contracting States:
**BE DE FR GB NL**

(56) References cited:
**CH-A- 471 027**
**CH-A- 568 456**
**DE-A-2 920 206**

(73) Proprietor: **SHELL INTERNATIONALE ·
RESEARCH MAATSCHAPPIJ B.V.
Carel van Bylandtlaan 30
NL-2596 HR Den Haag (NL)**

(72) Inventor: **Harrison, John David
1 Spencer Road
Newbury Berkshire (GB)**

(74) Representative: **Aalbers, Onno et al
P.O. Box 302
NL-2501 CH The Hague (NL)**

Courier Press, Leamington Spa, England.

## Description

The present invention relates to storage vessels for granular or particulate solids.

Storage vessels for light-weight granules or particles such as foam plastics granules comprising, for example, smooth, spherical foamed polystyrene beads for use in the currently important procedure of thermally insulating cavities, for example, the wall cavities of buildings have to be taken to the building site, and since they are bulky it is convenient to do so by providing mobile vessels such as road tankers which can carry and provide all the necessary equipment required for the thermal insulation operation. Problems arise, with such storage vessels in achieving progressive emptying of the vessel without the significant occurrence of voids or dead spaces within the mass of stored granules which results in cessation of supply and an inability adequately to utilise substantially the whole of the contents of the vessel.

Light-weight granules may be sucked out of a vessel through a movable pipe inserted into the mass of granules within the vessel, but to do so requires constant attention from an operator to ensure that the inlet end of the pipe is always in contact with granules. Moreover, if the vessel is a closed one with limited access to its contents, it is necessary to employ a vessel of such shape that as the level falls the granules tend to accumulate within the space it is practical to sweep by the suction pipe. Such construction is expensive as compared with a simple rectangular tank, and the storage volume which can be provided is less. If it is desired to dispense with such operator attention by providing a fixed off-take pipe, the interior of the vessel must be specially shaped so as to lead the granules towards that off-take point. To provide a vessel of that nature within the loading gauge of a road vehicle entails even greater expense and sacrifice of storage capacity.

Swiss Patentschrift 471 027 discloses a transport container for particulate solid materials such as grain. The container comprises a specially shaped base and walls and means for withdrawing particulate solid from the vessel in the form of two withdrawal pipe assemblies. The base is so shaped as to provide a series of funnels leading to sleeve openings in two externally mounted guide pipe sleeves which form part of the withdrawal pipe assemblies. A tube is rotatably located within each guide pipe sleeve, which tube is provided with tube openings so arranged that rotational movement of the tube within the guide pipe sleeve may bring the tube openings simultaneously into communication with the sleeve openings.

An object of the invention is to provide a storage vessel having effective means for withdrawing granular or particulate solid successively from pre-selected parts thereof.

According to the present invention there is provided a storage vessel which comprises a base and walls and means for withdrawing granular or particulate solid from the vessel, in the form of at least one withdrawal pipe assembly, the or each pipe assembly comprising a guide pipe sleeve which is provided with spaced sleeve openings along the length of the sleeve, and a tube which is located within the guide pipe sleeve and is provided with tube openings, characterised in that the pipe sleeve is fixedly mounted adjacent the base of the vessel between opposed walls of the vessel and extends over at least a major part of the distance between the opposed walls, the tube is slidable in the guide pipe sleeve, and the tube openings are so spaced along the length of the tube that axial movement of the tube within the guide pipe sleeve may bring the tube openings sequentially into communication with the sleeve openings to enable granular or particulate solid to be withdrawn successively from pre-selected parts of the vessel. In operation of the means for withdrawing granular or particulate solid, air is caused to flow through said tube. Granular solid stored in the vessel is entrained by the air flow, such solid entering the tube through communicating openings in the guide pipe sleeve and the tube, the location of which communicating openings with respect to the interior of the vessel depends on the position of the tube within the guide pipe sleeve, such air-entrained solid leaving the tube at an outlet end thereof.

The guide pipe sleeve and tube may be of any convenient cross-sectional shape, although usually a circular or rectangular, e.g. square, cross-section will be preferred for ease of manufacture. Preferably, the tube should be reasonably close fitting within the guide pipe sleeve. Preferably, the guide pipe sleeve comprises a series of equal cross-section pipe sections co-axially spaced from one another to provide the sleeve openings, and advantageously the pipe sections and the tube slidable therein are of circular cross section.

A storage vessel in accordance with the invention is advantageously a rectangular tank forming part of a self-propelled road vehicle having an air compressor. Use of a substantially rectangular storage tank enables maximum granules storage capacity to be attained within the loading gauge of a road vehicle. By providing within the tank the withdrawal pipe assembly or assemblies the location of the operative inlet opening or openings of which can be changed periodically so that the contents of the tank can be withdrawn by starting at one end of the tank and moving progressively towards the other end, substantially all of the stored granules can be utilised on site. There is thus no need for making the tank of special shape and/or for providing internal, space-washing baffles to direct the granules to a specific off-take point, and the only operator attention required is the short time needed periodically for changing the location of the operative inlet opening or openings. In a preferred self-propelled road vehicle, the compressor is disposed within a forward compartment having a common wall with the tank and a rearward stowage compartment also having a common wall with the tank is

provided, and the guide pipe sleeve of the or each withdrawal pipe assembly extends to said common walls, which are apertured to provide communication between the interior of the guide pipe sleeve and the interior of each compartment. However, other arrangements are possible; for example, the compressor can be disposed at the back of the vehicle. Air at atmospheric pressure is supplied to the interior of the tube within the guide pipe sleeve, an adjustable restrictor preferably being provided to enable the volume of air entering the tube to be controlled.

The spaced openings of the tube can be of any convenient size and shape. For example, they can each comprise a pair of radially opposed apertures. In one suitable disposition thereof the pairs of apertures are spaced apart at substantially equal distances along the length of the tube. The first and last pair of apertures are disposed at distances from the respective ends of the tube which ensure acceptable clearance of particles from the storage vessel. The openings provided by the guide pipe sleeve are spaced apart at distances which are different from the distances between the pairs of apertures in the tube.

Means may conveniently be provided for monitoring the axial movement of the tube within the guide pipe sleeve. Such means may comprise markings on the tube wall which correspond to points of communication between respective tube openings and sleeve openings. Alternatively, such means may comprise a fixed scale and a marker on the tube for indicating the position of the tube with respect to the fixed scale. Preferably, the fixed scale is provided with graduations in the form of a series of slots and the marker comprises an arm adapted to locate in any chosen slot in the series.

A storage vessel in accordance with the present invention may be embodied in a road vehicle and may form part of equipment suitable for use in thermally insulating buildings, comprising a self-propelled road vehicle equipped with the vessel, an air compressor and a storage tank for liquid binder, which storage tank is adapted to be pressurised by air supplied by the compressor, a large bore flexible supply hose connecting an outlet end of the tube to a filler gun, and small bore flexible supply lines connecting the compressor or an air reservoir fed thereby to the gun and connecting the storage tank to the gun, respectively.

The present invention will be further understood from the following detailed description of preferred embodiments thereof which is made by way of example only and with reference to the accompanying illustrative drawings, in which:—

Figure 1 is a side view of one form of guide pipe sleeve;

Figure 2 is a side view of an alternative form of guide pipe sleeve;

Figure 3 is a side view of a tube; and

Figure 4 is a schematic part-sectional side view of equipment suitable for use in thermally insulating buildings, which embodies a storage vessel in accordance with the invention in a road vehicle.

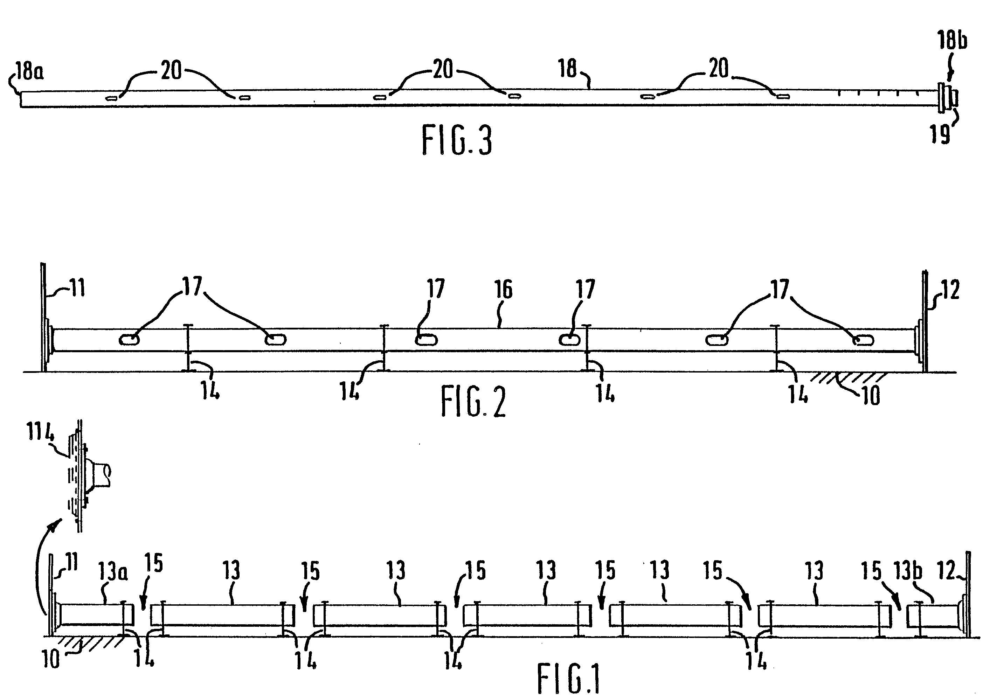

Referring to Figure 1, a rectangular tank has a base 10 and two end walls 11 and 12. A guide pipe sleeve comprises a series of equal cross-section circular bore pipe sections 13, 13a and 13b co-axially spaced from one another, and each mounted adjacent to and fixed to the base 10 by supports 14. The gaps between the pipe sections 13, 13a and 13b form sleeve openings. The five pipes 13 are of equal length, the pipe sections 13a and 13b are shorter than the pipe sections 13, pipe section 13b being the shortest. On the outer side of the wall 11, which is a common wall with a compressor compartment (not shown), is an adjustable air restrictor 114, conveniently of window ventilator form but having a fine mesh filter over its openings to prevent unwanted material entering or leaving the pipe section 13a, which opens into the compressor compartment through a hole in the wall 11. The wall 12 is a common wall with a stowage compartment (not shown), and the pipe section 13b opens into that compartment through a hole in the wall 12. The pipe sections 13, 13a and 13b are spaced equidistantly apart endwise to provide spaced sleeve openings 15 along the length of the guide pipe sleeve. An alternative form of guide pipe sleeve is shown in Figure 2 and comprises a single cylindrical pipe 16 having sleeve openings in the form of pairs of radially opposed elliptical apertures 17 spaced along its length in positions similar to the positions of the sleeve openings 15 of the guide pipe means of Figure 1.

Figure 3 shows a tube 18 which can be used in a withdrawal pipe assembly with either of the guide pipe sleeves of Figures 1 and 2. The tube 18 is of such a circular diameter that it fits closely within the guide pipe sleeve. The tube 18 is longer than the guide pipe sleeve, it is open at its ends 18a and 18b, and the end 18b is provided with a hose connector 19 for the attachment of a large bore flexible supply line (not shown) leading to a filler gun for cavity filling as described later. The tube 18 has a series of tube openings 20 spaced at intervals along its length, each tube opening 20 being formed by a pair of radially opposed elliptical apertures in the tube wall. It will be appreciated, however, that other dispositions and shapes of the tube openings 20 are feasible. The tube openings 20 are so spaced in relation to the spacing of the sleeve openings (15 or 17) of the guide pipe sleeve in which the tube 18 is to be slidably closely located that rightwards (with respect to the drawings) axial movement of the tube 18 therein brings the tube openings 20 sequentially into communication with the openings of the guide pipe sleeve. Such movement is accompanied by a progressive exposure of the end 18b of the tube 18 beyond the wall 12, and as an aid to positioning the tube 18 at the desired station a series of numbered marks may be provided on the tube 18 at its end 18b, the marks being equidistantly spaced apart. The spacing between the marks corresponds to the difference between the interval between sleeve openings (15 or 17) and the interval between tube openings 20, and this spacing may be as small as the axial dimension of a sleeve opening (15 or 17) or a tube opening 20, whichever is the larger if they are not equal. Also, as stated earlier, other means (not shown) can be provided for monitoring the axial movement of the tube within the guide pipe sleeve. For example, a marker on the tube in the form of an arm which is hingedly attached to the tube (or rigidly attached to the tube when the tube and the guide pipe are of circular cross-section and the tube is capable of at least limited rotation within the guide pipe sleeve) can be provided, and a fixed scale mounted for example on end wall 12, in the form of a slotted plate, the slots thereof acting both as graduations of the scale and as a means for retaining the arm and hence the tube in a selected axial position.

A rectangular storage tank in accordance with the invention, which is of a size appropriate to the storage of sufficient light-weight granules, for example, foam polystyrene granules to fill the wall cavities of the largest average building normally encountered in a wall thermal insulation operation, is advantageously provided with two guide pipe sleeves and associated tubes as described above, but it will be appreciated that depending on the size of the vessel one or even more than two can be provided.

In use, air from the compressor compartment enters the end 18a of the tube 18 and flows therethrough towards the end 18b. The induction of air into the tube 18 occurs when the injection gun is in operation. The latter causes a static pressure less than atmospheric pressure to arise in the hose connecting the gun to the outlet end 18b of the tube 18, and the air drawn into the tube 18 acts as a transport gas for the particles or granules. Depending on the position of the tube 18 within the guide pipe sleeve a granules suction station (operative inlet opening or openings) will be established by the communication established between a tube opening 20 of the tube 18 and a sleeve opening (15 or 17) of the guide pipe sleeve, and granules will be entrained by the air flowing through the tube 18. Normally, the first such station will be established near the wall 11 (this would correspond to the marking 1 on the end 18b of the tube 18), and the tube 18 will be progressively withdrawn to establish stations at locations corresponding to markings 2, 3—6 on the tube. In that way the storage vessel is progressively emptied, the withdrawal of granules being systematic from one end to the other of the storage vessel, thereby avoiding the occurrence of voids and dead spaces which would interrupt the supply of granules even though plenty remain in the vessel.

The present invention is of particular application to cavity wall filling operations in which light-weight, low thermal conductivity granules advantageously comprising smooth, spherical foamed polystryene beads are injected into the cavity in admixture with a liquid binder to form a cohesive thermal insulation therein. Such injection is carried out with a filler gun which is separately supplied with a stream of air-entrained granules, liquid binder, and air under pressure to effect injection, through holes in the brickwork, of the granules/binder mixture formed within the gun. A particularly suitable filler gun for this purpose forms the subject of copending European Patent Application EP—A—53 411 published on 9.6.1982. Such a cavity filling operation is carried out on site, and conveniently the granules supply and all the necessary equipment is carried to the site in a self-propelled road vehicle, which is parked near the building. After the necessary holes have been drilled in the walls, the filler gun is operated to inject granules/binder mixture through each hole in turn.

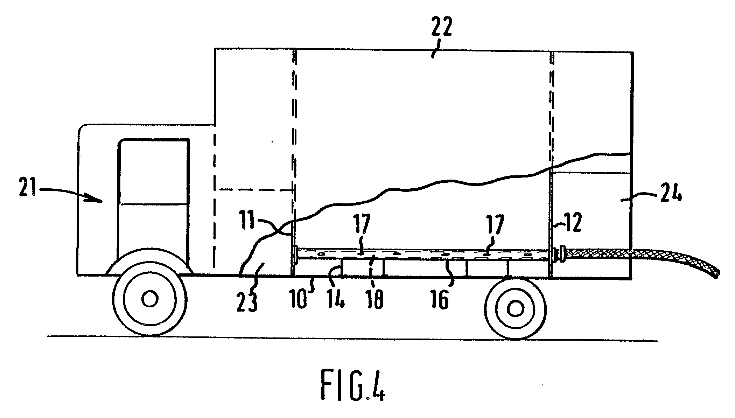

Figure 4 shows a schematic form equipment embodied in a self-propelled road vehicle. A self-propelled road vehicle 21 incorporates a rectangular tank 22 for granular solid, a compressor compartment 23 and a stowage compartment 24. Mounted on the base 1 of the tank 22 are two parallel guide pipe sleeve/suction tube combinations of the kind described with reference to Figures 1 or 2 and 3. The storage compartment 24 provides a convenient space in which to house the filler gun and flexible supply lines therefor when the vehicle is on the road or not in use.

## Claims

1. A storage vessel which comprises a base and walls and means for withdrawing granular or particulate solid from the vessel, in the form of at least one withdrawal pipe assembly, the or each pipe assembly comprising a guide pipe sleeve which is provided with spaced sleeve openings along the length of the sleeve, and a tube which is located within the guide pipe sleeve and is provided with tube openings, characterised in that the pipe sleeve is fixedly mounted adjacent the base of the vessel between opposed walls of the vessel and extends over at least a major part of the distance between the opposed walls, the tube is slidable in the guide pipe sleeve, and the tube openings are so spaced along the length of the tube that axial movement of the tube within the guide pipe sleeve may bring the tube openings sequentially into communication with the sleeve openings to enable granular or particulate solid to be withdrawn successively from pre-selected parts of the vessel.

2. A storage vessel as claimed in claim 1, wherein the guide pipe sleeve comprises a series of equal cross-section pipe sections co-axially spaced from one another to provide the sleeve openings.

3. A storage vessel as claimed in claim 2, wherein the pipe sections and the tube slidable therein are of circular cross-section.

4. A storage vessel as claimed in any one of claims 1 to 3, wherein the tube openings comprise pairs of radially opposed apertures, the pairs of apertures being spaced apart at substantially equal distances along the length of the tube.

5. A storage vessel as claimed in any one of claims 1 to 4, wherein means is provided for monitoring the axial movement of the tube within the guide pipe sleeve, which means comprises a fixed scale and a marker on the tube for indicating the position of the tube with respect to the fixed scale.

6. A storage vessel as claimed in any one of claims 1 to 5 wherein the fixed scale is provided with graduations in the form of a series of slots and the marker comprises an arm adapted to locate in any chosen slot in the series.

7. A storage vessel as claimed in any one of claims 1 to 6 wherein the means for withdrawing granular or particulate solid comprises two withdrawal pipe assemblies mounted substantially parallel to one another and to one pair of vessel walls and normal to the other pair of vessel walls.

**Revendications**

1. Un récipient de stockage qui comprend un fond et des parois et des moyens permettant d'extraire un solide granulaire ou particulaire du récipient, sous la forme d'au moins un ensemble d'extraction tubulaire, le ou chaque ensemble tubulaire comprenant un fourreau guide tubulaire qui est muni d'ouvertures de fourreau espacées sur la longueur du fourreau, et un tube qui est logé dans le fourreau guide tubulaire et est muni d'ouvertures de tube, caractérisé en ce que le fourreau tubulaire est monté en position fixe à proximité du fond de la cuve, entre des parois opposées de la cuve, et s'étend sur au moins la majeure partie de la distance entre les parois opposées, le tube peut coulisser dans le fourreau guide tubulaire et les ouvertures du tube sont espacées sur la longueur du tube de telle manière que le mouvement axial du tube dans le fourreau guide tubulaire puisse amener successivement les ouvertures du tube en communication avec les ouvertures du fourreau pour permettre d'extraire successivement le solide granulaire ou particulaire de parties présélectionnées du récipient.

2. Un récipient de stockage comme revendiqué dans la revendication 1, dans lequel le fourreau guide tubulaire comprend une série de tronçons de tube de même section transversale, espacés coaxialement les uns des autres pour ménager les ouvertures de fourreau.

3. Un récipient de stockage comme revendiqué dans la revendication 2, dans lequel les tronçons de tube et le tube qui coulisse dans ces tronçons sont de section circulaire.

4. Un récipient de stockage comme revendiqué dans une quelconque des revendications 1 à 3, dans lequel les ouvertures de tube comprennent des paires de trous opposés radialement, les paires de trous étant espacées de distance sensiblement égales sur la longueur du tube.

5. Un récipient de stockage comme revendiqué dans une quelconque des revendications 1 à 4, dans lequel des moyens sont prévus pour signaler le mouvement axial du tube à l'intérieur du fourreau guide tubulaire, ces moyens comprenant une échelle graduée fixe et un index prévu sur le tube pour indiquer la position du tube par rapport à l'échelle fixe.

6. Un récipient de stockage comme revendiqué dans une quelconque des revendications 1 à 5, dans lequel l'échelle fixe est munie de graduations présentées sous la forme d'une série de fentes et l'index comprend un bras adapté pour se placer dans une fente choisie quelconque de la série.

7. Un récipient de stockage comme revendiqué dans une quelconque des revendications 1 à 6, dans lequel les moyens servant à extraire le solide granulaire ou particulaire comprennent deux ensembles d'extraction tubulaires montés sensiblement parallèlement l'un à l'autre et à une paire de parois du récipient et perpendiculairement à l'autre paire de parois du récipient.

**Patentansprüche**

1. Lagerbehälter aus Boden- und Seitenwänden und einer Abführung für körniges oder pulverförmiges Material in Form zumindest einer Rohranordnung, welche eine Rohrführungshülse umfaßt, die über ihre Länge mit im Abstand angeordneten Öffnungen versehen ist, und sich ein Rohr innerhalb der Rohrführungshülse befindet und Rohröffnungen aufweist, dadurch gekennzeichnet, daß die Rohrhülse in der Nähe des Gefäßbodens fix montiert ist zwischen entgegengesetzten Seitenwänden des Gefässes und sich über zumindest einen Hauptteil des Abstands zwischen den gegenüberliegenden Gefäßwänden erstreckt, das Rohr in der Rohrhülse gleitbar ist und die Rohröffnungen über die Länge des Rohres im Abstand so verteilt sind, daß das Axialmoment des Rohres innerhalb der Rohrhülse die Rohröffnungen hintereinander in Kommunikation mit den Öffnungen der Hülse zu bringen vermag, sodaß körniges oder pulverförmiges Material hintereinander aus vorbestimmten Teilen des Gefäßes ausgetragen werden kann.

2. Lagerbehälter nach Anspruch 1 bei dem die Rohrführungshülse eine Reihe von Rohrabschnitten gleichen Querschnitts coaxial im Abstand voneinander zur Bildung der Öffnungen in der Hülse aufweist.

3. Lagerbehälter nach Anspruch 2 bei dem die Rohrabschnitte und das darin gleitbare Rohr einen kreisrunden Querschnitt besitzen.

4. Lagerbehälter nach einem der Ansprüche 1 bis 3 bei dem die Rohröffnungen Paare radial gegenüberstehender Durchbrüche umfassen, welche über die Länge des Rohres im wesentlichen in gleichen Abständen angeordnet sind.

5. Lagerbehälter nach einem der Ansprüche 1 bis 4 bei dem ein Mittel zur Überwachung der axialen Bewegung des Rohres innerhalb der Rohrführungshülse vorgesehen ist und eine feststehende Skala und ein Zeiger an dem Rohr zur Anzeige der Position des Rohres gegenüber der Skala dienen.

6. Lagerbehälter nach einem der Ansprüche 1 bis 5 bei dem die Skala mit Abstufungen in Form einer Reihe von Schlitzen versehen ist und der Anzeiger einen Arm aufweist, der in einen beliebigen Schlitz der Reihe einzugreifen vermag.

7. Lagerbehälter nach einem der Ansprüche 1 bis 6 bei dem zur Austragung körniger oder pulverförmiger Matealien zwei Rohranordnungen im wesentlichen parallel zueinander und zu zwei Behälterwänden und senkrecht zu den zwei anderen Behälterwänden vorgesehen sind.

FIG.1

FIG.2

FIG.3

FIG.4

0 053 412